# EUROPEAN PATENT APPLICATION

(11) **EP 1 775 921 A1**
(43) Date of publication of application: **18.04.2007**
(21) Application number: 05292126.9
(22) Date of filing: 12.10.2005
(51) Int. Cl.: H04M 1/57

(54) **Method for differentiating incoming calls in a communication terminal, corresponding terminal**

(71) Applicant: LG ELECTRONICS INC., Seoul (KR)
(72) Inventor: Richard, Gilles, 94210 La Varenne Saint Hilaire (FR)
(74) Representative: Le Forestier, Eric

(57) **Abstract**

The invention relates to a method for differentiating incoming calls in a communications terminal having a memory and processing means, where an incoming call may come from a contact among a plurality of contacts (A, B, C, D, E) stored in the memory and causes a ringtone to be generated for indicating the call to a user, characterized in that it comprises the step of setting a ringing volume (10) for said ringtone according to a ringing volume value stored in the memory in association with said contact.

The invention relates as well to a system for the processing of the method.

## Description

### FIELD OF THE INVENTION

The present invention relates to a method for differentiating incoming calls in a communications terminal having a memory and processing means, where an incoming call may come from a contact among a plurality of contacts stored in the memory and causes a ringtone to be generated for indicating the call to a user.

The invention also relates to a terminal in which the method is carried out.

### BACKGROUND OF THE INVENTION

Currently, it is possible to assign a specific ringtone to each phonebook contact in a communication terminal, the terminal being for instance a telephone handset. To do so, the user sets the ringtone in the profile of the contact via menu navigation with the keyboard and display of the handset. It is also possible to assign a ringtone to a group of contacts. In that latter case, the group of contacts has a common profile.

The assignment of a specific ringtone allows to partly differentiate incoming calls and identify the caller.

Moreover, if a handset user wants to be sure not to miss an important expected call, the volume of the profile can be set to a desired level, for instance to the highest volume.

However, this will make all incoming calls corresponding to the profile ring with the desired volume. This situation can be really bothering to people around the user - at work or in public - when the set desired volume is the highest volume.

### SUMMARY OF THE INVENTION

It is an object of the invention to mitigate at least one of the drawbacks of the prior art.

To do so, it is proposed according to the invention a method for differentiating incoming calls on a terminal according to claim 1.

The dependent method claims recite advantageous but non limiting ways to perform the method of claim 1.

The invention also provides a terminal capable of differentiating incoming calls, according to claim 8, and preferred but non limiting aspects of this terminal are recited in the dependent terminal claims.

The invention has numerous advantages.

The invention allows the setting of the assigned ringtone of a contact or a group of contacts to a desired volume level. It is therefore possible to differentiate a contact among a group of contacts having the same profile. The user is able to differentiate the incoming call, not only thanks to the specific ringtone, also called ringing tone, but also thanks to the volume of the ringtone, also called ringing volume.

The user is able to set the volume level of the ringing to a high volume for example for a specific contact or group of contacts. The user is therefore sure not to miss the expected important call from the contact when it comes in. The user does not bother the people around by having all incoming calls ringing with the highest volume though.

The user can modify the desired volume level. The user can also set the ringing volume level to a default value or a reference value, the default and reference values being modifiable too.

### BRIEF DESCRIPTION OF THE DRAWINGS

Other aspects, objects and advantages of the invention will be better apparent on reading the following description of the invention, made with reference to the accompanying drawings, in which:
- Figure 1 is a schematic representation of an embodiment of a terminal according to the invention;
- Figure 2 is a diagram of the main steps performed by the method according to the invention - this diagram containing different alternatives which can be selected by a user to implement the invention;
- Figures 3A and 3B are schematic representations of a list of contacts and of groups of contact respectively which can be displayed on a terminal according to Fig. 1 ;
- Figure 4 is a schematic representation of a profile record of the contact which can be displayed on a terminal according to Fig. 1;
- Figure 5 is a schematic representation of a selected contact option record which can be displayed on a terminal according to Fig. 1;
- Figure 6 is a schematic representation of ringtone record which can be displayed on a terminal according to Fig. 1; and
- Figures 7 and 8 are schematic representations of ringing volume records which can be displayed on a terminal according to Fig. 1.

In all the figures, similar elements are referred to with identical numerical references.

### DESCRIPTION OF PREFERRED EMBODIMENTS

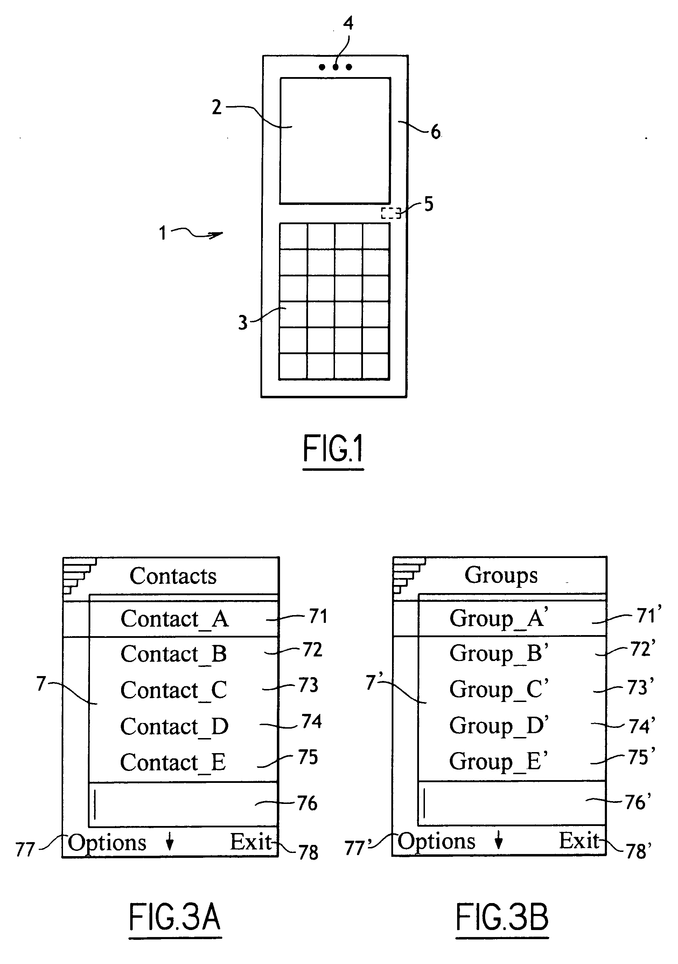

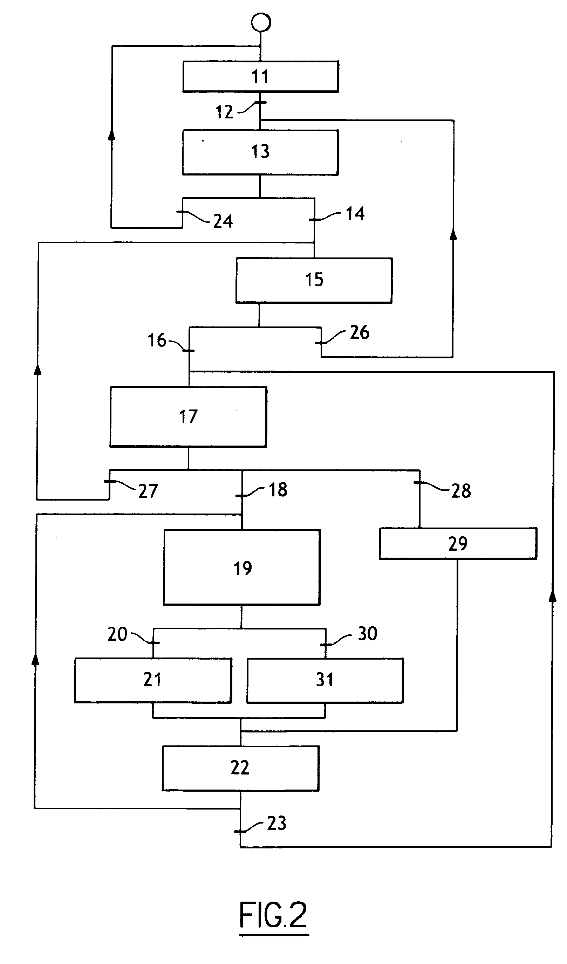

Figure 1 is a schematic representation of an embodiment of a terminal 1 according to the invention.

The terminal 1 comprises a housing 6, display means 2, input means 3, ringing means 4 for indicating incoming calls and processing means 5.

The terminal 1 is to advantage a handset for a telephony network, and more precisely a mobile phone, but can be any type of terminal of a communication network. Figure 1 shows a bar phone type. The invention is also applicable to a clamshell phone type for instance.

The display means 2 form to advantage a LCD screen, but can be of any type of screen, such as a plasma screen.

The input means 3 comprise to advantage a keyboard, but can also comprise a touch pad, joysticks, rolls and/or scrolls. The input means 3 allow the user to perform all the selection steps and filling in steps described in further details below.

The ringing means 4 can comprise a speaker, but also a vibrator. In the rest of the specification, the volume of the ringtone of the calls can therefore also refer to the level of vibration of the vibrator.

The processing means 5 comprise a memory for memorizing a list 7 of contacts - contacts A, B, C, D and E shown in Figure 3A or a list 7' of groups A', B', C', D' and E' shown in Figure 3B. In the case of a terminal being a handset or a mobile phone, the fists 7 and 7' of contacts and groups can be a phone book. The processing means 5 comprise as well means for the management of the communications between the terminal and the communication network, and more precisely the calls.

As will be more apparent from the rest of the specification, the processing means 5, the display means 2 and the input means 3 can cooperate to form setting means to set values of the ringing volume on the terminal.

Figure 2 is a diagram of the main steps performed by the method according to the invention.

In step 11, the user of the terminal 1 activates the input means 3 to launch a phonebook application and display the list of contacts or groups on the display means 2. The activation can be a stroke on a specific key for instance.

The screen showing the list of contacts 7 or groups 7', as displayed on the display means 2, is shown in Figure 3A and 3B respectively.

The list 7 comprises different fields 71, 72, 73, 74 and 75 for the displaying of contacts A, B, C, D and E respectively. The list 7' comprises different fields 71', 72', 73', 74' and 75' for the displaying of groups A', B', C', D' and E' respectively.

It should be understood that a group of contacts gathers several contacts from the phonebook. As will be more apparent in the following description, the processing of the group A' is similar to the processing of contact A for instance. A group of contacts can be dealt with as any other contact, and the list of groups can be dealt with as a list of contacts.

A field 76 or 76' enables the user to input a string of characters with the input means 3, to search for a specific contact or group in the list 7 or 7' for instance.

A field 78 or 78' can be selected with the input means 3 to exit the list 7 or 7' and go back to the previous screen on the display means 2.

In step 12, the user selects a contact, for instance the contact A or group A', by selecting an option field 77 or 77'. The field 77 or 77' is called "options" in Figure 3A or 3B but can carry any name, such as "select", "OK", etc.

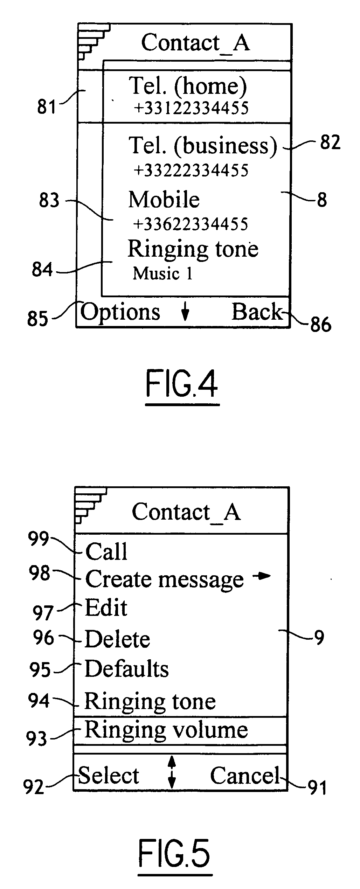

In step 13, the terminal displays the selected contact record. The screen 8 showing the selected contact record, as displayed on the display means 2, is shown in Figure 4.

The selected contact record 8 comprises different fields 81, 82, 83 and 84 for the displaying of the characteristics of the selected contact A for instance. The field 81 of screen 8 comprises for instance the telephone number of the landline of the contact A, the field 82 comprises the telephone number of the office of the contact A, the field 83 comprises the telephone number of the mobile phone of the contact A and the field 84 comprises the name of the ringing tone associated to the contact A. A field not shown on the figures can mention a group to which the contact belongs.

Typically, the name in field 84 indicates the melody of the ringing tone when there is an incoming call from the contact A on the terminal. This is a first means to differentiate the incoming calls from the contact out of the other contacts.

It should be understood that the user can choose the group A' in step 12. In that case, the selected contact record can display the name of the contacts belonging to the group, the details of each contact in the group, the melody of the ringing tone for the group, etc, similarly to step 13.

A field 86 can be selected with the input means 3 to exit the screen 8 and go back to the previous screen on the display means 2. By selecting this field in step 24, the user causes the return to step 11.

A field 85 enables the user to select an option menu associated with fields 81 to 84.

In step 14, the user selects the option menu by selecting the field 85.

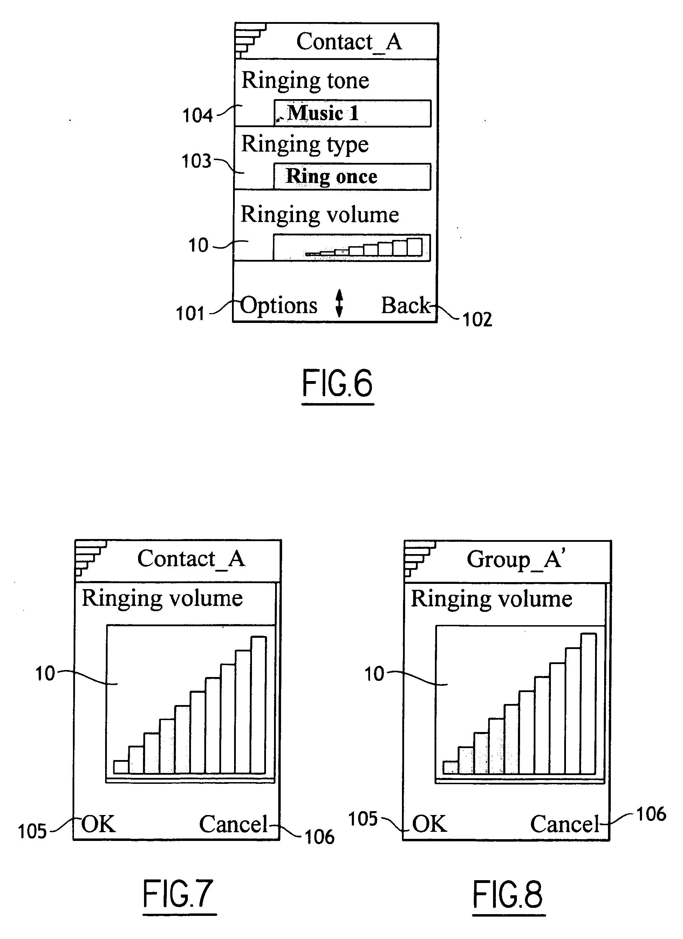

In step 15, the terminal displays a screen 9 associated with the selected contact option record. The screen 9 showing the selected contact option record, as displayed on the display means 2, is shown in Figure 5.

The selected contact option screen 9 comprises different fields 91 to 99 for the displaying of options. The field 99 allows the calling of the corresponding selected contact. The field 98 allows the creation of a message, for instance a message MMS (Multimedia Messaging Service) or SMS (Short Messaging Service). The field 97 allows the edition of the contact, for modifications for instance. The field 96 allows the deletion of the contact. The field 95 allows the setting of the parameters to default values. The field 94 allows the selection of the ringing tone. The field 93 allows the selection of the ringing volume.

A field 91 can be selected with the input means 3 to exit the screen 9 and go back to the previous screen on the display means 2. By selecting this field in step 26, the user causes the return to step 13.

A field 92 enables the user to select, in step 16, the ringing volume field 93 for instance.

A similar option screen can be displayed in the case where a group of contacts is selected.

In step 17, the terminal displays the selected field in step 16, i.e. a screen including the ringing volume. The screen including the selected ringing volume 10, as displayed on the display means 2, is shown in Figure 6.

The screen of Figure 6 shows fields 103 and 104 corresponding, for instance, to the ringing type and the ringing tone respectively. Fields 103 and 104 are optional.

A field 102 can be selected with the input means 3 to exit the ringing volume screen and go back to the previous screen on the display means 2. By selecting this field in step 27, the user causes the return to step 15.

A field 101 allows the selection of an option menu.

By selecting the field 101 in step 18, the user can set the ringing volume value manually.

In step 19, subsequent to step 18, the terminal displays the selected field in step 18, i.e. a screen 10 showing the ringing volume. The screen 10 showing the ringing volume, as displayed on the display means 2, is shown in Figure 7. The screen 10 displays the volume value currently assigned to the ringing tone of the selected contact. The ringing volume value is stored in the memory in association with said contact.

Input means 3 allow the adjusting of the ringing volume value. By activating input means in step 20, subsequent to step 19, for instance by pressing a left arrow key to lower the ringing volume, step 21 is processed.

In step 21, if the current volume is superior to the minimum volume, then the ringing volume is decreased, for instance by a unit decrement. This decrement is memorized in the memory of the processing means 5, and the ringing volume has a newly assigned value.

By activating input means in step 30, subsequent to step 19, for instance by pressing a right arrow key to raise the ringing volume, step 31 is processed.

In step 31, if the current volume is lower than the maximum volume, then the ringing volume is increased, for instance by a unit increment. This increment is memorized in the memory of the processing means 5, and the ringing volume has a newly assigned value.

Then, in step 22, the new volume is played by the terminal and the screen 10 is modified so as to allow the user to assess the new assigned ringing volume.

If the user does not agree with the newly assigned ringing volume, step 19 is processed again.

If the user agrees with the newly assigned ringing volume, the user selects a field 105, called "OK" for instance. Step 17 is then processed again.

If the user does not want to modify the ringing volume any longer, the user selects a field 106 to go back to the previous screen. The volume is set again to the previous ringing volume in the processing means 5.

Figure 8 shows that steps 17, 27, 18, 18 through 22, 30 and 31 described above can be applied to a group of contacts. From an option screen showing features of the group, a user can select a ringing volume field. The terminal displays then a screen, similar to the screen of figure 6 or according to figure 8, from where the user can modify manually the ringing volume of the group, as already explained for contact A.

Step 19 is not compulsory and can be optional, and the ringing volume can be set manually from a record according to Figure 6.

Once the ringing volume of a contact or a group of contacts is set to a value different from the volume for the other contacts, the user can differentiate the incoming calls from the contact.

By selecting the field 101 in step 28, the user can set the ringing volume value via a default program.

The default program allows the user to do two main operations. The user can firstly set a volume level reference value - also called reference ringing volume value - for the terminal. The volume level reference value is programmable and/or modifiable by the user. The user can therefore customize the volume level reference value for the terminal, at any time.

An option screen - not shown in the figures - allows the display, for instance in step 29, of a field where the volume level reference value can be set. The adjusting of the volume level reference value is similar to what has been described in steps 19 to 23.

The volume level reference value can be used for disabling differentiation, when incoming call differentiation is no longer desired, as explained below.

In that case, in order to use the volume level reference value for disabling differentiation of the incoming calls, the volume level reference value is for instance set to 5 - which corresponds in that example to a standard ringing volume - , in a volume scale from 1 to 10. When the user of the terminal has modified the ringing volume for a contact or a group of contacts to a higher level, the user can reset the different ringing volumes of each contact to the same level. This can be done by selecting the volume level reference value for the contact. The volume level reference value supersedes the ringing volume of the activated profile for the contact. The step of setting the ringing volume for incoming calls of the contact to the volume level reference value is therefore done in order to disable the differentiation of incoming calls.

As previously explained, in step 29, a screen allows the display of a field where the ringing volume can be set to the volume level reference value when the user desires to disable the differentiation.

The user can set the ringing volume of a profile gathering several contacts to the volume level reference value.

The user can secondly thanks to the default program set the ringing volume of a contact equal to the ringing volume of the default ringing volume of the profile to which the contact belongs. This feature should be used in the case where the user has changed the ringing volume for a contact, temporarily, and then would like to set it back to the same volume level as for all the other contacts of the profile.

The default ringing volume of the profile can be modified by the user, like the volume level reference value.

An alternative embodiment of the invention can also be described.

In that possible alternative embodiment, the volume level reference value is used for activating differentiation of the incoming calls.

In that case, in order to use the volume level reference value, the user can set the volume level reference value to the highest volume the terminal can handle. The user can thus differentiate important calls from a specific contact by assigning the ringing volume of a contact or group of contact to the volume level reference value. In that case, the terminal will play the ringtone very loudly, to differentiate important calls. The step of setting the ringing volume for incoming calls of the contact or group of contacts to the volume level reference value is therefore done in order to differentiate incoming calls.

## Claims

1. A method for differentiating incoming calls in a communications terminal having a memory and processing means (5), where an incoming call may come from a contact among a plurality of contacts (A, B, C, D, E) stored in the memory and causes a ringtone to be generated for indicating the call to a user, **characterized in that** it comprises the step of setting a ringing volume (10) for said ringtone according to a ringing volume value stored in the memory and associated with said contact.

2. A method according to claim 1, wherein said ringing volume value is stored in a profile record (9) of the contact.

3. A method according to claim 1 or 2, further comprising a step of selectively setting a reference ringing volume value for the terminal.

4. A method according to claim 3, further comprising a step of selectively setting the ringing volume (10) for a given contact (71) to said reference ringing volume value.

5. A method according to claim 4, wherein the reference ringing volume value corresponds to a standard ringing volume.

6. A method according to claim 4, wherein the reference ringing volume value corresponds to a ringing volume louder than a standard volume.

7. A method according to any preceding claim, wherein one same ringing volume value is stored in the memory in association with a group of contacts.

8. A terminal comprising processing means (5) and a memory, said memory storing contact information for a plurality of contacts, and ringtone generating means (4) for indicating incoming calls to a user, **characterized in that** it comprises means (2, 3, 5) for setting a ringing volume (10) for said ringtone according to a ringing volume value stored in the memory and associated with a contact from which said incoming call is coming.

9. A terminal according to claim 8, wherein said ringing volume value is stored in a profile record (9) of the contact.

10. A terminal according to claim 8 or 9, further comprising setting means (2, 3, 5) for setting a reference ringing volume value for the terminal.

11. A terminal according to claim 10, further comprising setting means for setting the ringing volume (10) for a given contact (71) to said reference ringing volume value.

12. A terminal according to claim 11, wherein the reference ringing volume value corresponds to a standard ringing volume.

13. A method according to claim 11, wherein the reference ringing volume value corresponds to a ringing volume louder than a standard volume.

14. A terminal according to any one of claims 1-13, wherein one same ringing volume value in stored in the memory in association with a group of contacts.
